# EUROPEAN PATENT APPLICATION

(11) **EP 4 216 625 A1**
(43) Date of publication of application: **26.07.2023**
(21) Application number: 21882045.4
(22) Date of filing: 20.10.2021
(51) Int. Cl.: H04W 68/00, H04W 4/06

(54) **PAGING METHOD AND APPARATUS, TERMINAL, NETWORK DEVICE AND READABLE STORAGE MEDIUM**

(30) Priority: 22.10.2020 CN 202011140823
(71) Applicant: Vivo Mobile Communication Co., Ltd., Dongguan, Guangdong 523863 (CN)
(72) Inventor: ZHANG, Yanxia, Dongguan, Guangdong 523863 (CN); XIE, Zhenhua, Dongguan, Guangdong 523863 (CN)
(74) Representative: Murgitroyd & Company
(86) International application number: PCT/CN2021/124932
(87) International publication number: WO 2022/083630

(57) **Abstract**

This application discloses a paging method and apparatus, a terminal, a network side device, and a readable storage medium, and pertains to the field of communication technologies. An implementation solution specifically includes: an access network device obtains state information of a terminal, where the terminal is in an air-interface connected state; and the access network device pages the terminal based on the state information of the terminal.

## Description

### CROSS-REFERENCE TO RELATED APPLICATION

This application claims priority to Chinese Patent Application No. 202011140823.6 filed in China on October 22, 2020, which is incorporated herein by reference in its entirety.

### TECHNICAL FIELD

This application pertains to the field of communication technologies, and in particular, to a paging method and apparatus, a terminal, a network side device, and a readable storage medium.

### BACKGROUND

In the prior art, generally, only a terminal in a disconnected state, such as an idle state, monitors a paging channel to receive a paging message (paging message). For a terminal in a connected state, because a network side knows a location (such as under coverage of which base station) of the terminal in a network, there is no special requirement for paging the terminal in the connected state. However, after introduction of a broadcast multicast service, there is a new special requirement for paging the terminal in the connected state. For example, the terminal only needs to receive the broadcast multicast service. Therefore, air interface connection is established only, and a core network management remains idle. However, the terminal in this state may need to receive paging from a core network device, to enter a core-network connected state. Therefore, how to implement paging of a terminal in an air-interface connected state is a problem to be resolved urgently at present.

### SUMMARY

Embodiments of this application provide a paging method and apparatus, a terminal, a network side device, and a readable storage medium, to resolve a problem of how to implement paging of a terminal in an air-interface connected state.

According to a first aspect, a paging method is provided. The method is performed by an access network device and includes:
obtaining state information of a terminal, where the terminal is in an air-interface connected state; and
paging the terminal based on the state information of the terminal.

According to a second aspect, a paging method is provided. The method is performed by a core network device and includes:
receiving auxiliary indication information from a first access network device. The auxiliary indication information is used to assist the core network device in canceling paging a target terminal by a second access network device, and the second access network device is an access network device except the first access network device.

According to a third aspect, a paging method is provided. The method is performed by a terminal and includes:
receiving paging indication information from an access network device.

The terminal is in an air-interface connected state. A mode for sending the paging indication information is determined by the access network device based on state information of the terminal.

According to a fourth aspect, a paging apparatus is provided. The paging apparatus is applied to an access network device and includes:
an obtaining module, configured to obtain state information of a terminal, where the terminal is in an air-interface connected state; and
a paging module, configured to page the terminal based on the state information of the terminal.

According to a fifth aspect, a paging apparatus is provided. The paging apparatus is applied to a core network device and includes:
a third receiving module, configured to receive auxiliary indication information from a first access network device. The auxiliary indication information is used to assist the core network device in canceling paging a target terminal by a second access network device, and the second access network device is an access network device except the first access network device.

According to a sixth aspect, a paging apparatus is provided. The paging apparatus is applied to a terminal and includes:
a fourth receiving module, configured to receive paging indication information from an access network device.

The terminal is in an air-interface connected state. A mode for sending the paging indication information is determined by the access network device based on state information of the terminal.

According to a seventh aspect, a terminal is provided, where the terminal includes a processor, a memory, and a program or an instruction stored in the memory and executable on the processor, where when the program or instruction is executed by the processor, steps of the method according to the third aspect are implemented.

According to an eighth aspect, a network side device is provided. The network side device includes a processor, a memory, and a program or an instruction stored in the memory and executable on the processor. When the program or the instruction is executed by the processor, steps of the method according to the first aspect or steps of the method according to the second aspect are implemented.

According to a ninth aspect, a readable storage medium is provided. The readable storage medium stores a program or an instruction. When the program or the instruction is executed by a processor, the steps of the method according to the first aspect are implemented, the steps of the method according to the second aspect are implemented, or the steps of the method according to the third aspect are implemented.

According to a tenth aspect, a chip is provided. The chip includes a processor and a communication interface. The communication interface is coupled to the processor. The processor is configured to execute a program or an instruction, to implement the steps of the method according to the first aspect, the steps of the method according to the second aspect, or the steps of the method according to the third aspect.

According to an eleventh aspect, a program product is provided. The program product is stored in a non-volatile storage medium. The program product is executed by at least one processor to implement the method according to the first aspect or the method according to the second aspect.

In the embodiments of this application, after the access network device obtains the state information of the terminal in the air-interface connected state, the access network device may page the terminal based on the state information. For example, the access network device pages the terminal by using the terminal-specific message or pages the terminal through the paging channel. Therefore, paging of the terminal in the air-interface connected state can be implemented, and the terminal can perform state transition or obtain service information in time.

### BRIEF DESCRIPTION OF DRAWINGS

FIG. 1 is a block diagram of a wireless communication system according to an embodiment of this application;
FIG. 2 is a flowchart of a paging method according to an embodiment of this application;
FIG. 3 is another flowchart of a paging method according to an embodiment of this application;
FIG. 4 is still another flowchart of a paging method according to an embodiment of this application;
FIG. 5 is a schematic diagram of a structure of a paging apparatus according to an embodiment of this application;
FIG. 6 is another schematic diagram of a structure of a paging apparatus according to an embodiment of this application;
FIG. 7 is still another schematic diagram of a structure of a paging apparatus according to an embodiment of this application;
FIG. 8 is a schematic diagram of a structure a communication device according to an embodiment of this application;
FIG. 9 is a schematic diagram of a structure of terminal according to an embodiment of this application; and
FIG. 10 is a schematic diagram of a structure a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that, data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6^{th} Generation, 6G) communication system.

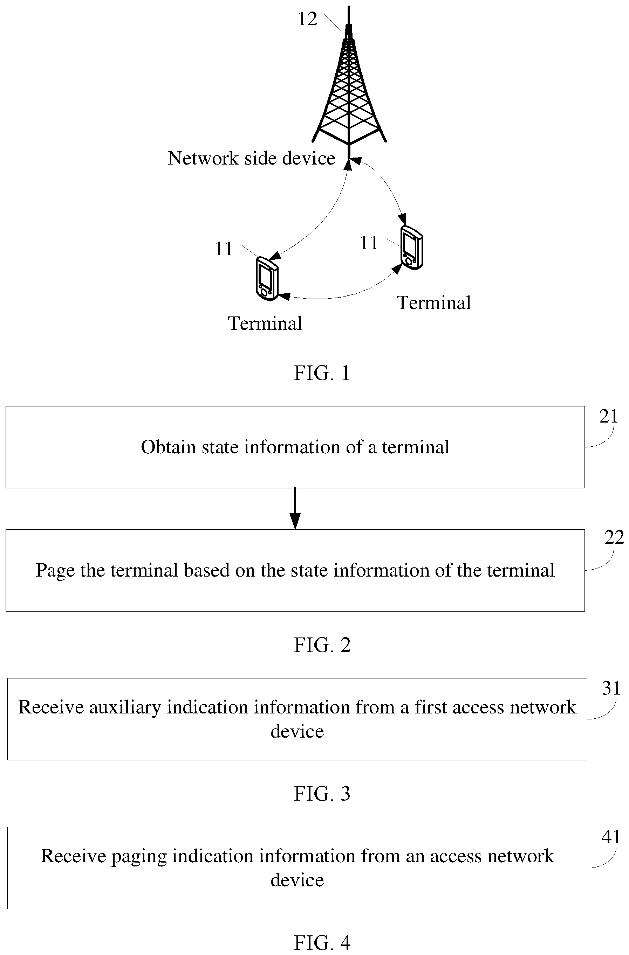

FIG. 1 is a block diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), or a laptop computer (Laptop Computer), or called a notebook computer, a personal digital assistant (Personal Digital Assistant, PDA), a palmtop computer, a netbook, an ultra mobile personal computer (ultra-mobile personal computer, UMPC), a mobile Internet device (Mobile Internet Device, MID), a wearable device (Wearable Device), a vehicle user equipment (Vehicle User Equipment, VUE), or a pedestrian user equipment (Pedestrian User Equipment, PUE). The wearable device includes bracelets, headphones, glasses, and the like. It should be noted that a specific type of the terminal 11 is not limited in the embodiments of this application. The network side device 12 may be a base station or a core network. The base station may be referred to as an access network device, a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a paging method provided in an embodiment of this application is described in detail by using a specific embodiment and an application scenario.

FIG. 2 is a flowchart of a paging method according to an embodiment of this application. The method is performed by an access network device, such as a radio access network (Radio Access Network, RAN) node. As shown in FIG. 2, the method includes the following steps.

Step 21: Obtain state information of a terminal.

In this embodiment of this application, the terminal is in an air-interface connected state. Further, for the terminal, an air interface may be in a connected state and a core network management is in a connected state, or an air interface is in a connected sate and a core network management in an idle state.

Step 22: Page the terminal based on the state information of the terminal.

Optionally, the manner for paging the terminal may include any one of the following.

### (1) The terminal is paged by using a terminal-specific message.

It should be noted that the terminal-specific message may be user plane information or a control plane message.

For example, the terminal-specific message may be the control plane information, such as a radio resource control (Radio Resource Control, RRC) message. The terminal is paged in a manner that the RRC message carries paging indication information. The paging indication information is used to inform the terminal that a network side is paging the terminal. In an implementation, the paging indication information may be bit indication information. For example, when the paging indication information exists, it indicates that the network side (such as a core network) is paging the terminal. Alternatively, when the paging indication information does not exist, it means that the network side (such as a core network) does not page the terminal. In another implementation, the paging indication information always exists, and different values are used to indicate whether the network side (such as the core network) pages the terminal.

It should be noted that when the terminal-specific information is the control plane information, the terminal-specific information may be RRC control plane information, media access control (Media Access Control, MAC) layer information, or physical (Physical, PHY) layer information, which is not limited herein.

In another example, the terminal-specific message may be a terminal-specific RRC message. The terminal is paged in a manner that the terminal-specific RRC message carries a paging message.

In still another example, the terminal-specific information may be the user plane information, such as paging indication information carried by a data radio bearer (Data Radio Bearer, DRB).

It should be noted that when the terminal-specific information is the user plane information, the terminal-specific information may be packet data convergence protocol (Packet Data Convergence Protocol, PDCP) layer information, radio link control (Radio Link Control, RLC) layer information, or MAC layer information, which is not limited herein.

### (2) The terminal is paged through a paging channel.

For example, the access network device may indicate that the network side is paging the terminal by using paging indication information carried by the paging channel.

For example, the paging indication information may indicate to page a terminal in a specific state. For example, a new field is introduced in control signaling carrying the paging indication information (for example, an indication information field is introduced in a short message field in downlink control information (Downlink Control Information, DCI)), to indicate to page the terminal in the specific state. The specific state may be a state with the air interface in the connected state and the core network management in the idle state. For the terminal in a state with the air interface in the connected state and the core network management in the idle state, in a case that the paging indication information is received through the paging channel, it is determined, based on the paging indication information, that a paging message exists, and the paging message is received.

In another example, the paging indication information may indicate to page a terminal in a specific state. The specific state may be a terminal receiving a specific service or a terminal interested in the specific service. For example, a new domain (such as a short message domain in the DCI) is introduced in the control signaling carrying the paging indication information, to indicate to page a terminal receiving the specific service (such as an MBS). When the terminal is interested in, expects to receive, or is receiving a broadcast multicast service, and when the paging indication information is received through the paging channel, the terminal determines, based on the paging indication information, that a paging message exists, and receives the paging message.

In the paging method according to this embodiment of this application, after the access network device obtains state information of the terminal in the air-interface connected state, the access network device may page the terminal based on the state information. For example, the access network device pages the terminal by using the terminal-specific message or pages the terminal through the paging channel. Therefore, paging of the terminal in the air-interface connected state can be implemented, and the terminal can perform state transition or obtain service information in time.

In this embodiment of this application, the state information of the terminal may include but is not limited to at least one of the following:
a connection state of the terminal;
a verification state of the terminal;
a service state of the terminal; and
a paging configuration state of the terminal.

Optionally, the connection state of the terminal may include any one of the following.

A state in which the core network management is in the idle state. That is, the air interface for the terminal is in the connected state and the core network management is in the idle state.

A state in which the core network management is in the connected state. That is, the air interface for the terminal is in the connected state and the core network management is in the connected state.

Optionally, the verification state of the terminal may include any one of the following:
a state in which the terminal has passed verification of the core network; and
a state in which the terminal fails to the verification of the core network.

A scenario in which the terminal fails to pass the verification of the core network includes at least one of the following.

(1) The terminal does not send verification information to the network side. For example, when the terminal establishes an air interface connection, the terminal does not send the verification information. The verification information is used for the core network device to verify an identity of the terminal (such as verifying whether the terminal is legal).

(2) The access network device does not send verification information to the core network device. For example, when the terminal establishes an air interface connection, the terminal sends the verification information. The verification information is used for the core network device to verify an identity of the terminal (such as verifying whether the terminal is legal). The access network device does not forward the verification information sent by the terminal to the core network device.

(3) The access network device sends verification information to the core network device, but the core network does not approve the verification information. For example, when the terminal establishes an air interface connection, the terminal sends the verification information. The verification information is used for the core network device to verify an identity of the terminal (such as verifying whether the terminal is legal). The access network device forwards the verification information sent by the terminal to the core network device. However, when the core network device verifies the terminal based on the verification information, a verification result is failure (for example, the terminal is illegal after verification).

Optionally, the service state of the terminal may include any one of the following:
a state in which the terminal is interested in a service; and
a state in which the terminal is not interested in a service.

Optionally, the paging configuration state of the terminal may include any one of the following.
(1) The terminal is configured to monitor a paging channel in a case that an air interface is in a connected state. That is, the network side configures the terminal with an air interface in the connected state to monitor the paging channel, to receive the paging message.
(2) The terminal is not configured to monitor a paging channel in a case that the air interface is in the connected state. That is, the network side does not configure the terminal with the air interface in the connected state to monitor the paging channel, to receive the paging message. It can be understood that the terminal may not monitor the paging channel to receive the paging message, or the terminal may monitor the paging channel to receive the paging message.
(3) The terminal is configured to not to monitor to the paging channel in a case that the air interface is in the connected state. That is, the network side configures the terminal with the air interface in the connected state to not to monitor to the paging channel, to receive the paging message.
(4) The terminal is not configured to not monitor the paging channel in a case that the air interface is in the connected state. That is, the network side does not configure the terminal with the air interface in the connected state to not to monitor to the paging channel, to receive the paging message. It can be understood that the terminal may not monitor the paging channel to receive the paging message, or the terminal may monitor the paging channel to receive the paging message.

In this embodiment of this application, optionally, the access network device may page the terminal by using the terminal-specific message in a case that at least one of the following is satisfied:
(1) that a core network device indicates to page the terminal, and the terminal is in the air-interface connected state and a core-network-management idle state;
(2) that a core network device indicates to page the terminal, and the terminal is in a state of having passed verification of a core network;
(3) that a core network device indicates to page the terminal, and the terminal is configured to not to monitor to a paging channel in a case that an air interface is in a connected state;
(4) that a core network device indicates a service change, and a changed service is a service that the terminal is interested in; and
(5) that a core network device indicates a service change, and the terminal is configured to not to monitor to a paging channel in a case that an air interface is in a connected state.

In some scenarios, if the terminal is in the air-interface connected state and a core-network-management idle state, the core network device may indicate to page the terminal and the service change for the access network device simultaneously. The access network device pages the terminal based on the state information of the terminal. That is, in this case, there may be two reasons for the access network device to page the terminal: one is that the core network indicates to page the terminal, and the other is that the core network indicates the service change. In this case, the access network device may determine, in a case that at least one of the following is satisfied, to page the terminal by using the terminal-specific message:
(1) that the core network device indicates to page the terminal and the service change, and the terminal is in a state of having passed verification of the core network;
(2) that the core network device indicates to page the terminal and the service change, and a changed service is a service that the terminal is interested in; and
(3) that the core network device indicates to page the terminal and the service change, and the terminal is configured to not to monitor to the paging channel in a case that the air interface is in the connected state.

Optionally, the access network device may choose, in a case that at least one of the following is satisfied, to page the terminal through the paging channel:
(1) that the core network device indicates to page the terminal, and the terminal is in a state of having not passed verification of the core network;
(2) that the core network device indicates to page the terminal, and the terminal is configured to monitor the paging channel in a case that the air interface is in the connected state; and
(3) that the core network device indicates the service change, and the terminal is configured to monitor the paging channel in a case that the air interface is in the connected state.

In some scenarios, if the terminal is in the air-interface connected state and a core-network-management idle state, the core network device may indicate to page the terminal and the service change for the access network device simultaneously. The access network device pages the terminal based on the state information of the terminal. That is, in this case, there may be two reasons for the access network device to page the terminal: one is that the core network indicates to page the terminal, and the other is that the core network indicates the service change. In this case, the access network device may determine, in a case that at least one of the following is satisfied, to page the terminal through the paging channel.
(4) that the core network device indicates to page the terminal and the service change, and the terminal is in a state of having not passed verification of the core network;
(5) that the core network device indicates to page the terminal and the service change, and a changed service is a service that the terminal is not interested in; and
(6) that the core network device indicates to page the terminal and the service change, and the terminal is configured to monitor the paging channel in a case that the air interface is in the connected state.

In this embodiment of this application, the access network device may receive first indication information from the core network device. The first indication information is used to indicate to page the terminal. For example, the first indication information is used to indicate to page a terminal in a specific state.

Optionally, the terminal in the specific state may be any one of the following:
a terminal with an air interface in a connected state and a core network management in the connected state; and
a terminal with an air interface in a connected state and a core network management is in an idle state. For example, the terminal only needs to receive a broadcast multicast service. Therefore, only air interface connection is established but the core network management is in the idle state.

Optionally, the first indication information may include at least one of the following.

A paging message from a core network. For example, the access network device receives, from the core network device, a paging message (PAGING message) for paging the terminal, and pages a designated terminal based on the paging information of the core network.

A service change notice. Optionally, the service change notice may be any one of the following: a service start notice, service suspension notice, service recovery notice, service stop notice, and the like. For example, after the access network device receives a change notice of a specific type of service, such as a broadcast multicast service, from the core network device, the access network device pages the terminal based on the change notice.

In this embodiment of this application, optionally, the access network device may send auxiliary indication information to the core network device. The auxiliary indication information is used to assist the core network device in canceling paging the terminal by another access network device except the access network device. In this way, by means of the auxiliary indication information, signaling overhead of other access network devices can be saved.

Further, sending the auxiliary indication information to the core network device may include: in a case that the terminal is paged through the terminal-specific message, the access network device sends the auxiliary indication information to the core network device.

Optionally, the access network device may receive paging cancellation indication information sent by the core network device and stop paging the terminal. The paging cancellation indication information is used to indicate cancellation of paging the terminal.

FIG. 3 is a flowchart of a paging method according to an embodiment of this application. The method is performed by a core network device. As shown in FIG. 3, the method includes the following steps:

Step 31: Receive auxiliary indication information from a first access network device.

The auxiliary indication information is used to assist the core network device in canceling paging a target terminal by a second access network device. The second access network device is an access network device except the first access network device.

Further, before receiving the auxiliary indication information from the first access network device, the core network device may further send first indication information to the first access network device and the second access network device. The first indication information is used to indicate to the target terminal.

For example, the first indication information is used to indicate to page a terminal in a specific state. Optionally, the terminal in the specific state may be any one of the following:
a terminal with an air interface in a connected state and a core network management in the connected state; and
a terminal with an air interface in a connected state and a core network management is in an idle state. For example, the terminal only needs to receive a broadcast multicast service. Therefore, only air interface connection is established but the core network management is in the idle state.

Optionally, the first indication information may include at least one of the following.

A paging message from a core network. For example, the access network device receives, from the core network device, the paging message (PAGING message) for paging the terminal, and pages a designated terminal based on the paging information of the core network.

A service change notice. Optionally, the service change notice may be any one of the following: a service start notice, service suspension notice, service recovery notice, service stop notice, and the like. For example, after the access network devices receives a change notice of a specific type of service, such as a broadcast multicast service, from the core network device, the access network device pages a specific terminal based on the change notice.

Optionally, the core network device may further send paging cancellation indication information to the second access network device. The paging cancellation indication information is used to indicate cancellation of paging the target terminal.

In the paging method according to this embodiment of this application, the first indication information is sent to the access network device by the core network device, so that the access network device may page a terminal after obtaining the state information of the terminal in an air-interface connected state. For example, the terminal is paged through the terminal-specific message or the terminal is paged through the paging channel. Therefore, paging of the terminal in the air-interface connected state can be implemented, and the terminal can perform state transition in time.

FIG. 4 is a flowchart of a paging method according to an embodiment of this application. The method is performed by a terminal. As shown in FIG. 4, the method includes the following steps:

Step 41: Receive paging indication information from an access network device.

In this embodiment, the terminal is in an air-interface connected state. Further, for the terminal, an air interface may be in a connected state and a core network management is in a connected state, or an air interface is in a connected sate and a core network management in an idle state. A mode for sending the paging indication information may be determined by the access network device based on state information of the terminal.

It should be noted that, for the state information of the terminal in this embodiment, please refer to the description in the embodiment shown in FIG. 2. Details are not described herein again.

Optionally, the terminal may receive a paging message from the access network device through any one of the following: a terminal-specific message and a paging channel.

In the paging method according to this embodiment of this application, the terminal in the air-interface connected state may receive the paging indication information from the access network device. Therefore, paging of the terminal in the air-interface connected state can be implemented, and the terminal can perform state transition or obtain service information in time.

Optionally, after receiving the paging indication information, the terminal may determine, based on the paging indication information, that a paging message exists, and receive the paging message.

Optionally, when the terminal receives the paging indication information in the air-interface connected state and the core-network-management idle state, for example, after the paging indication information is received by using the terminal-specific message or through the paging channel, a process of establishment of core network connection may be initiated. For example, in a case that the terminal is in the air-interface connected state and the core-network-management idle state, the terminal determines, based on the paging indication information, that the paging message exists, and receives the paging message. If the paging message carries a terminal identifier (such as a 5G S-temporary mobile subscription identifier (5G S-Temporary Mobile Subscription Identifier, 5G-S-TMSI)) of the terminal, the terminal initiates the process of establishment of core network connection. In another example, the terminal sends an RRC message to the access network device. The RRC message carries a non-access-stratum (Non-Access-Stratum, NAS) container. The NAS container carries information related to connection and establishment of a core network.

For example, in a case that the terminal is in the air-interface connected state and the core-network-management idle state, the terminal determines, based on the paging indication information, that the paging message exists, and receives the paging message. If the paging message carries only a change notice indication information of a broadcast multicast service, the terminal does not initiate a process of the connection and establishment of the core network. That is, the terminal keeps in the air-interface connected state and the core-network-management idle state.

Optionally, after the terminal receives the paging indication information from the access network device, the terminal may obtain information related to a service change.

For example, the terminal determines, based on the paging indication information, that the paging message exists, and receives the paging message. When the paging message carries change notice indication information of the broadcast multicast service, the terminal obtains information related to a service change.

In still another example, when the terminal determines, based on the paging indication information, that the change notice indication information of the broadcast multicast service exists, the terminal obtains the information related to a service change.

Further, the terminal may obtain the information related to a service change by using any one of the following:
a system message; and
a paging message.

For example, when the paging indication information received by the terminal is related to a specific service change, the paging indication information is sent by using the terminal-specific message or through the paging channel, and the information related to a service change may be obtained through the system message or paging message.

For example, if the information related to a service change is sent through a common control channel, such as a single cell-multicast control channel (Single Cell-Multicast Control Channel, SC-MCCH), the terminal may receive an SC-MCCH message when receiving a paging for the service change.

In another example, if the information related to a service change is carried in the paging message, the terminal receives the paging message to obtain the information related to a service change.

It should be noted that the paging method provided in this embodiment of this application may be performed by a paging apparatus, or a control module for performing the paging method, in the paging apparatus. In this embodiment of this application, the paging apparatus provided in an embodiment of this application is described by taking that the paging apparatus performs the paging method as an example.

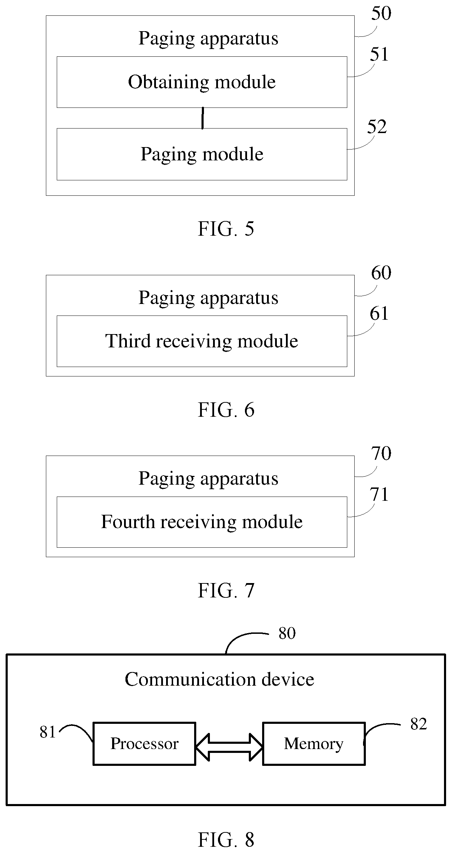

FIG. 5 is a schematic diagram of a structure of a paging apparatus according to an embodiment of this application. The paging apparatus is applied to an access network device. As shown in FIG. 5, the paging apparatus 50 includes:
an obtaining module 51, configured to obtain state information of a terminal, where the terminal is in an air-interface connected state; and
a paging module 52, configured to page the terminal by the access network device based on the state information of the terminal.

Optionally, the paging module 52 is specifically configured to perform any one of the following:
paging the terminal by using a terminal-specific message; and
paging the terminal through a paging channel.

Optionally, the state information of the terminal includes at least one of the following:
a connection state of the terminal;
a verification state of the terminal;
a service state of the terminal; and
a paging configuration state of the terminal.

Optionally, the connection state of the terminal includes any one of the following:
a state in which a core network management is in an idle state; and
a state in which a core network management is in a connected state.

Optionally, the verification state of the terminal includes any one of the following:
a state in which the terminal has passed verification of a core network; and
a state in which the terminal has not passed verification of a core network.

Optionally, the service state of the terminal includes any one of the following:
a state in which the terminal is interested in a service; and
a state in which the terminal is not interested in a service.

Optionally, the paging configuration state of the terminal includes any one of the following:
that the terminal is configured to monitor a paging channel in a case that an air interface is in a connected state;
that the terminal is not configured to monitor a paging channel in a case that an air interface is in a connected state;
that the terminal is configured to not to monitor to a paging channel in a case that an air interface is in a connected state; and
that the terminal is not configured to not to monitor to a paging channel in a case that an air interface is in a connected state.

Optionally, the paging module 52 is specifically configured to page the terminal by using the terminal-specific message in a case that at least one of the following is satisfied:
that a core network device indicates to page the terminal, and the terminal is in the air-interface connected state and a core-network-management idle state;
that a core network device indicates to page the terminal, and the terminal is in a state of having passed verification of the core network;
that a core network device indicates to page the terminal, and the terminal is configured to not to monitor to the paging channel in a case that an air interface is in a connected state;
that a core network device indicates a service change, and a changed service is a service that the terminal is interested in; and
that a core network device indicates a service change, and the terminal is configured to not to monitor to a paging channel in a case that an air interface is in a connected state.

Optionally, the paging module 52 is specifically configured to page the terminal by using the paging channel in a case that at least one of the following is satisfied:
that a core network device indicates to page the terminal, and the terminal is in a state of having not passed verification of the core network;
that a core network device indicates to page the terminal, and the terminal is configured to monitor a paging channel in a case that an air interface is in a connected state; and
that a core network device indicates a service change, and the terminal is configured to monitor a paging channel in a case that an air interface is in a connected state.

Optionally, the paging apparatus 50 further includes:
a first receiving module, configured to receive first indication information from the core network device. The first indication information is used to indicate to page the terminal.

Optionally, the first indication information includes at least one of the following:
a paging message from a core network and service change notice.

Optionally, the paging apparatus 50 further includes:
a first sending module, configured to send auxiliary indication information to a core network device. The auxiliary indication information is used to assist the core network device in canceling paging the terminal by another access network device except the access network device.

Optionally, the first sending module is specifically configured to send the auxiliary indication information to the core network device in a case that the terminal is paged by using a terminal-specific message.

Optionally, the paging apparatus 50 further includes:
a second receiving module, configured to receive paging cancellation indication information sent by the core network device. The paging cancellation indication information is used to indicate to cancel paging the terminal; and
a stopping module, configured to stop paging the terminal.

It can be understood that the paging apparatus 50 provided in this embodiment of this application can implement various processes implemented in the method embodiment in FIG. 2, and a same technical effect can be achieved. To avoid repetition, details are not described herein again.

FIG. 6 is a schematic diagram of a structure of a paging apparatus according to an embodiment of this application. The paging apparatus is applied to a core network device. As shown in FIG. 6, the paging apparatus 60 includes:
a third receiving module 61, configured to receive auxiliary indication information from a first access network device. The auxiliary indication information is used to assist the core network device in canceling paging a target terminal by a second access network device. The second access network device is an access network device except the first access network device.

Optionally, the paging apparatus 60 further includes:
a second sending module, configured to send first indication information to the first access network device and the second access network device. The first indication information is used to indicate to page the target terminal.

Optionally, the first indication information includes at least one of the following:
a paging message from a core network and service change notice.

Optionally, the apparatus further includes:
a third sending module, configured to send paging cancellation indication information to the second access network device. The paging cancellation indication information is used to indicate to cancel paging the target terminal.

It can be understood that the paging apparatus 60 provided in this embodiment of this application can implement various processes implemented in the method embodiment in FIG. 3, and a same technical effect can be achieved. To avoid repetition, details are not described herein again.

FIG. 7 is a schematic diagram of a structure of a paging apparatus according to an embodiment of this application. The paging apparatus is applied to a terminal. As shown in FIG. 7, the paging apparatus 70 includes:
a fourth receiving module 71, configured to receive paging indication information from an access network device.

The terminal is in an air-interface connected state. A mode for sending the paging indication information is determined by the access network device based on state information of the terminal.

Optionally, the fourth receiving module 71 is specifically configured to receive the paging indication information from the access network device through any one of the following:
a terminal-specific message and a paging channel.

Optionally, the paging apparatus 70 further includes:
a determining module, configured to determine, based on the paging indication information, that a paging message exists; and
a fifth receiving module, configured to receive the paging message.

Optionally, the paging apparatus 70 further includes:
a performing module, configured to initiate a process of establishment of a core network after the terminal receives the paging indication information in a case that the terminal is in the air-interface connected state and a core-network-management idle state.

Optionally, the performing module is further configured to obtain information related to a service change after receiving the paging indication information from the access network device.

Optionally, the performing module is further configured to:
obtain the information related to a service change through any one of the following after the paging indication information is received from the access network device;
a system message; and
a paging message.

It can be understood that the paging apparatus 70 provided in this embodiment of this application can implement various processes implemented in the method embodiment in FIG. 4, and a same technical effect can be achieved. To avoid repetition, details are not described herein again.

The paging apparatus 70 in this embodiment of this application may be an apparatus, or a component, an integrated circuit, or a chip in a terminal. The apparatus may be a mobile terminal or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The paging apparatus 70 in this embodiment of this application may be an apparatus with an operating system. The operating system may be an Android (Android) operating system, an iOS operating system, or another possible operating system, which is not specifically limited in the embodiments of this application.

Optionally, as shown in FIG. 8, an embodiment of this application further provides a communication device 80, including a processor 81, a memory 82, and a program or an instruction stored in the memory 82 and executable on the processor 81. For example, in a case that the communication device 80 is an access network device, when the program or instruction is executed by the processor 81, each process of the method embodiment shown in FIG. 2 can be implemented, and a same technical effect can be achieved. In a case that the communication device 80 is a core network device, when the program or instruction is executed by the processor 81, each process of the method embodiment shown in FIG. 3 can be implemented, and a same technical effect can be achieved. In a case that the communication device 80 is a terminal, when the program or instruction is executed by the processor 81, each process of the method embodiment shown in FIG. 4 can be implemented, and a same technical effect can be achieved. To avoid repetition, details are not described herein again.

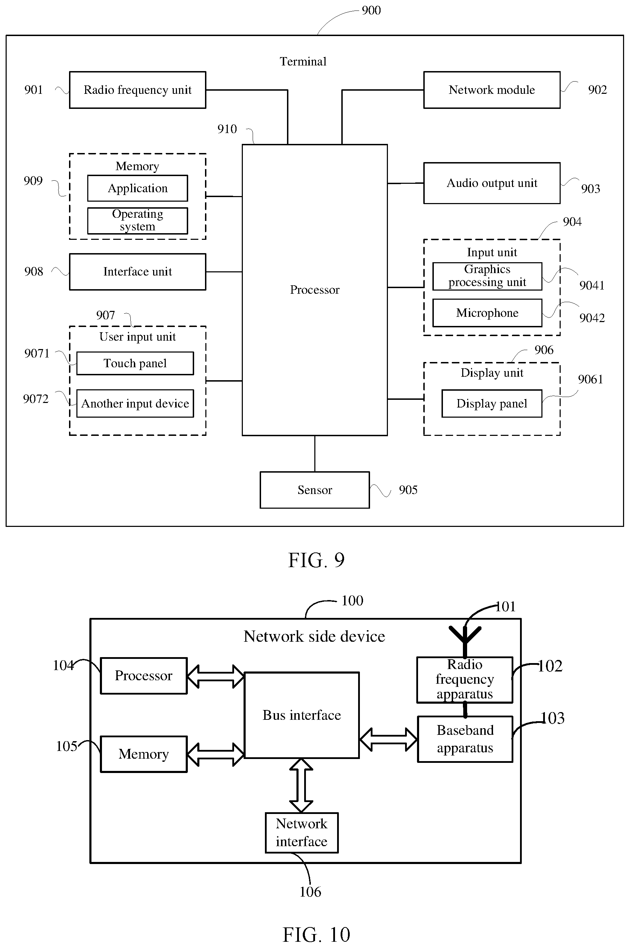

FIG. 9 is a schematic diagram of a hardware structure of a terminal according to an embodiment of this application.

The terminal 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

It can be understood by a person skilled in the art that the terminal 900 may further include a power supply (such as a battery) that supplies power to each component. The power supply may be logically connected to the processor 910 by using a power management system, to implement functions such as charging, discharging, and power consumption management by using the power management system. The terminal structure shown in FIG. 9 constitutes no limitation on the terminal, and the terminal may include more or fewer components than those shown in the figure, or combine some components, or have different component arrangements. Details are not described herein.

It should be understood that, in the embodiments of this application, the input unit 904 may include a graphics processing unit (Graphics Processing Unit, GPU) 9041 and a microphone 9042, and the graphics processing unit 9041 processes image data of a still picture or video obtained by an image capture apparatus (such as a camera) in a video capture mode or an image capture mode. The display unit 906 may include a display panel 9061. The display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include but is not limited to a physical keyboard, a functional button (such as a volume control button or a power on/off button), a trackball, a mouse, and a joystick. Details are not described herein.

In this embodiment of this application, the radio frequency unit 901 receives downlink data from a network side device and then sends the downlink data to the processor 910 for processing; and sends uplink data to the network side device. Usually, the radio frequency unit 901 includes but is not limited to an antenna, at least one amplifier, a transceiver, a coupler, a low noise amplifier, a duplexer, and the like.

The memory 909 may be configured to store a software program or an instruction and various pieces of data. The memory 909 may mainly include a program or instruction storage area and a data storage area. The program or instruction storage area may store an operating system, and an application or an instruction required by at least one function (for example, a sound playing function or an image playing function). In addition, the memory 909 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 910 may include one or more processing units. Optionally, an application processor and a modem processor may be integrated into the processor 910. The application processor mainly processes an operating system, a user interface, an application, an instruction, or the like. The modem processor mainly processes wireless communication, for example, a baseband processor. It can be understood that, alternatively, the modem processor may not be integrated into the processor 910.

The radio frequency unit 901 is configured to receive paging indication information from an access network device.

The terminal is in an air-interface connected state. A mode for sending the paging indication information is determined by the access network device based on state information of the terminal 900.

Optionally, the radio frequency unit 901 is further configured to receive the paging indication information from the access network device through any one of the following: a terminal-specific message and paging channel.

Optionally, the processor 910 is further configured to initiate a process of establishment of a core network after the terminal 900 receives the paging indication information in the air-interface connected state and a core-network-management idle state.

Specifically, an embodiment of this application further provides a network side device. As shown in FIG. 10, a network device 100 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and transmits the received information to the baseband apparatus 103 for processing. In a downlink direction, the baseband apparatus 103 processes information to be sent and sends processed information to the radio frequency apparatus 102, and the radio frequency apparatus 102 processes the received information and sends processed information through the antenna 101.

The foregoing band processing apparatus may be located in the baseband apparatus 103, and the method performed by the network side device in the foregoing embodiment may be implemented in the baseband apparatus 103. The network device 100 includes a processor 104 and a memory 105.

The baseband apparatus 103 may include, for example, at least one baseband board. A plurality of chips are disposed on the baseband board. As shown in FIG. 10, one chip is, for example, the processor 104, connected to the memory 105, to invoke a program in the memory 105, thereby performing operations of the network device shown in the foregoing method embodiment.

The network device 100 may further include a network interface 106, configured to exchange information with the radio frequency apparatus 102. The interface is, for example, a common public radio interface (Common Public Radio Interface, CPRI).

Specifically, the network side device in this embodiment of this application further includes: an instruction or a program stored in the memory 105 and executable on the processor 104, and the processor 104 invokes the instruction or program in the memory 105 to perform the method performed by the modules show in FIG. 5 or FIG. 6, and a same technical effect is achieved. To avoid repetition, details are not described herein again.

An embodiment of this application further provides a readable storage medium. The readable storage medium stores a program or an instruction. When the program or the instruction is executed by a processor, the processes of the paging method embodiment are implemented, and a same technical effect can be achieved. To avoid repetition, details are not provided herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip. The chip includes a processor and a communication interface. The communication interface is coupled to the processor. The processor is configured to execute a program or an instruction of a network side device to implement the processes of the paging method embodiment, and a same technical effect can be achieved. To avoid repetition, details are not provided herein again.

It should be understood that the chip mentioned in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the implementations of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as an ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. A paging method, performed by an access network device and comprising:
obtaining state information of a terminal, wherein the terminal is in an air-interface connected state; and
paging the terminal based on the state information of the terminal.

2. The method according to claim 1, wherein the paging the terminal comprises any one of following:
paging the terminal by using a terminal-specific message; and
paging the terminal through a paging channel.

3. The method according to claim 1, wherein the state information of the terminal comprises at least one of following:
a connection state of the terminal;
a verification state of the terminal;
a service state of the terminal; and
a paging configuration state of the terminal.

4. The method according to claim 3, wherein the connection state of the terminal comprises any one of following:
a state in which a core network management is in an idle state; and
a state in which a core network management is in a connected state.

5. The method according to claim 3, wherein the verification state of the terminal comprises any one of following:
a state in which the terminal has passed verification of a core network; and
a state in which the terminal has not passed verification of a core network.

6. The method according to claim 3, wherein the service state of the terminal comprises any one of following:
a state in which the terminal is interested in a service; and
a state in which the terminal is not interested in a service.

7. The method according to claim 3, wherein the paging configuration state of the terminal comprises any one of following:
that the terminal is configured to monitor a paging channel in a case that an air interface is in a connected state;
that the terminal is not configured to monitor a paging channel in a case that an air interface is in a connected state;
that the terminal is configured to not to monitor a paging channel in a case that an air interface is in a connected state; and
that the terminal is not configured to not to monitor a paging channel in a case that an air interface is in a connected state.

8. The method according to claim 1, wherein the paging the terminal based on the state information of the terminal comprises:
paging the terminal by using a terminal-specific message in a case that at least one of following is satisfied:
that a core network device indicates to page the terminal, and the terminal is in the air-interface connected state and a core-network-management idle state;
that a core network device indicates to page the terminal, and the terminal is in a state of having passed verification of a core network;
that a core network device indicates to page the terminal, and the terminal is configured to not to monitor a paging channel in a case that an air interface is in a connected state;
that a core network device indicates a service change, and a changed service is a service that the terminal is interested in; and
that a core network device indicates a service change, and the terminal is configured to not to monitor a paging channel in a case that an air interface is in a connected state.

9. The method according to claim 1, wherein the paging the terminal according to the state information of the terminal comprises:
paging the terminal through a paging channel in a case that at least one of following is satisfied:
that a core network device indicates to page the terminal, and the terminal is in a state of having not passed verification of a core network;
that a core network device indicates to page the terminal, and the terminal is configured to monitor a paging channel in a case that an air interface is in a connected state; and
that a core network device indicates a service change, and the terminal is configured to monitor a paging channel in a case that an air interface is in a connected state.

10. The method according to claim 1, further comprising:
receiving first indication information from a core network device, wherein the first indication information is used to indicate to page the terminal.

11. The method according to claim 10, wherein the first indication information comprises at least one of following:
a paging message from a core network, and service change notice.

12. The method according to claim 1, further comprising:
sending auxiliary indication information to a core network device, wherein the auxiliary indication information is used to assist the core network device in canceling paging the terminal by another access network device except the access network device.

13. The method according to claim 12, wherein the sending auxiliary indication information to a core network device comprises:
sending the auxiliary indication information to the core network device when the terminal is paged by using a terminal-specific message.

14. The method according to claim 1, further comprising:
receiving paging cancellation indication information sent by a core network device, wherein the paging cancellation indication information is used to indicate to cancel paging the terminal; and
stopping paging the terminal.

15. A paging method, performed by a core network device and comprising:
receiving auxiliary indication information from a first access network device, wherein the auxiliary indication information is used to assist the core network device in canceling paging a target terminal by a second access network device, and the second access network device is an access network device except the first access network device.

16. The method according to claim 15, wherein before the receiving auxiliary indication information from a first access network device, the method further comprises:
sending first indication information to the first access network device and the second access network device, wherein the first indication information is used to indicate to page the target terminal.

17. The method according to claim 16, wherein the first indication information comprises at least one of following:
a paging message from a core network, and service change notice.

18. The method according to claim 15, further comprising:
sending paging cancellation indication information to the second access network device, wherein the paging cancellation indication information is used to indicate to cancel paging the target terminal.

19. A paging method, performed by a terminal and comprising:
receiving paging indication information from an access network device;
wherein the terminal is in an air-interface connected state; and a mode for sending the paging indication information is determined by the access network device based on state information of the terminal.

20. The method according to claim 19, wherein the receiving paging indication information from an access network device comprises:
receiving the paging indication information from the access network device through any one of following:
a terminal-specific message and a paging channel.

21. The method according to claim 19, further comprising:
determining, based on the paging indication information, that there is a paging message; and
receiving the paging message.

22. The method according to claim 19, wherein after the terminal receives the paging indication information in the air-interface connected state and a core-network-management idle state, the method further comprises:
initiating a process of establishment of core network connection.

23. The method according to claim 19, wherein after the receiving paging indication information from an access network device, the method further comprises:
obtaining information related to a service change.

24. The method according to claim 23, wherein the obtaining information related to a service change comprises:
obtaining, based on any one of following, the information related to service change:
a system message; and
a paging message.

25. The method according to claim 19, wherein the state information of the terminal comprises at least one of following:
a connection state of the terminal;
a verification state of the terminal;
a service state of the terminal; and
a paging configuration state of the terminal.

26. The method according to claim 25, wherein the connection state of the terminal comprises any one of following:
a state in which a core network management is in an idle state; and
a state in which a core network management is in a connected state.

27. The method according to claim 25, wherein the verification state of the terminal comprises any one of following:
a state in which the terminal has passed verification of a core network; and
a state in which the terminal has not passed verification of a core network.

28. The method according to claim 25, wherein the service state of the terminal comprises any one of following:
a state in which the terminal is interested in a service; and
a state in which the terminal is not interested in a service.

29. The method according to claim 25, wherein the paging configuration state of the terminal comprises any one of following:
that the terminal is configured to monitor a paging channel in a case that an air interface is in a connected state;
that the terminal is not configured to monitor a paging channel in a case that an air interface is in a connected state;
that the terminal is configured to not to monitor a paging channel in a case that an air interface is in a connected state; and
that the terminal is not configured to not to monitor a paging channel in a case that an air interface is in a connected state.

30. A paging apparatus, applied to an access network device and comprising:
an obtaining module, configured to obtain state information of a terminal, wherein the terminal is in an air-interface connected state; and
a paging module, configured to page the terminal according to the state information of the terminal.

31. The apparatus according to claim 30, wherein the paging module is specifically configured to perform any one of following:
paging the terminal by using a terminal-specific message; and
paging the terminal through a paging channel.

32. A paging apparatus, applied to a core network device and comprising:
a third receiving module, configured to receive auxiliary indication information from a first access network device, wherein the auxiliary indication information is used to assist the core network device in canceling paging a target terminal by a second access network device, and the second access network device is an access network device except the first access network device.

33. A paging apparatus, applied to a terminal and comprising:
a fourth receiving module, configured to receive paging indication information from an access network device;
wherein the terminal is in an air-interface connected state; and a mode for sending the paging indication information is determined by the access network device based on state information of the terminal.

34. A network side device, comprising a processor, a memory, and a program or an instruction stored in the memory and executable on the processor, wherein when the program or instruction is executed by the processor, steps of the paging method according to any one of claims 1 to 14 are implemented, or steps of the paging method according to any one of claims 15 to 18 are implemented.

35. A terminal, comprising a processor, a memory, and a program or an instruction stored in the memory and executable on the processor, wherein when the program or instruction is executed by the processor, steps of the paging method according to any one of claims 19 to 29 are implemented.

36. A readable storage medium, wherein the readable storage medium stores a program or an instruction, when the program or instruction is executed by a processor, steps of the paging method according to any one of claims 1 to 14, steps of the paging method according to any one of claims 15 to 18, or steps of the paging method according to any one of claims 19 to 29 are implemented.

37. A chip, comprising a processor and a communication interface, wherein the communication interface is coupled to the processor, and the processor is configured to execute a program or an instruction, to implement steps of the paging method according to any one of claims 1 to 14, steps of the paging method according to any one of claims 15 to 18, or steps of the paging method according to any one of claims 19 to 29.

38. A program product, wherein the program product is stored in a nonvolatile storage medium, and the program product is executed by at least one processor, to implement steps of the paging method according to any one of claims 1 to 14, steps of the paging method according to any one of claims 15 to 18, or steps of the paging method according to any one of claims 19 to 29.
